# EUROPEAN PATENT SPECIFICATION

(11) **EP 3 124 364 B1**
(45) Date of publication and mention of the grant of the patent: **08.05.2019**
(21) Application number: 15768153.7
(22) Date of filing: 16.03.2015
(51) Int. Cl.: B62K 5/08, B62K 5/027, B62K 5/05, B62K 25/04, B62K 5/10, B62K 5/00

(54) **SADDLE-TYPE VEHICLE**
SATTELFAHRZEUG
VÉHICULE DE TYPE À SELLE

(30) Priority: 24.03.2014 JP 2014060197
(43) Date of publication of application: 01.02.2017
(73) Proprietor: Yamaha Hatsudoki Kabushiki Kaisha, Iwata-shi, Shizuoka 438-8501 (JP)
(72) Inventor: HARA, Nobuo, Iwata-shi Shizuoka 438-8501 (JP); SHIBUYA, Yu, Iwata-shi Shizuoka 438-8501 (JP)
(74) Representative: Grünecker Patent- und Rechtsanwälte PartG mbB
(86) International application number: PCT/JP2015/057731
(87) International publication number: WO 2015/146679

(56) References cited:
- EP-A1- 2 154 050
- EP-A1- 2 514 660
- FR-A1- 2 953 184
- JP-A- 2011 045 184
- JP-A- 2012 081 784
- JP-A- 2012 126 262
- JP-A- 2013 022 993
- JP-A- 2013 244 763
- JP-A- 2013 244 763

## Description

The present invention relates to saddle riding type vehicles and more particularly to a saddle riding type vehicle including a pair of front wheels.
Prior art document JP 2013 244763 A discloses a vehicle control apparatus with a motor including a rotary shaft, a regulation unit, an acceleration sensor and a gyro sensor 46 for detecting an angle of inclination of a vehicle body, and an ECU. A positional relation of a right front wheel, a left front wheel and the vehicle body are changed while being interlocked with a rotation angle of the rotary shaft. The motor adjusts the angle of inclination of the vehicle body into a predetermined angle by rotating the rotary shaft in accordance with power supplied from the ECU. Furthermore, the ECU stores the positional relation of the right front wheel, the left front wheel and the vehicle body in the case where the angle of inclination of the vehicle body becomes the predetermined angle. Moreover, the regulation unit regulates the rotation of the rotary shaft in the case where the vehicle is stopped, and thereby maintaining the positional relation of the right front wheel, the left front wheel and the vehicle body.

An example of saddle riding type vehicles is a three-wheeled vehicle including a pair of front wheels and a link mechanism that connects the pair of front wheels to a vehicle body frame. The three-wheeled vehicle can turn while leaning by the operation of the link mechanism.

JP 2005-313876 A discloses an anti-roll device for a three-wheeled vehicle. The anti-roll device includes a brake disk provided integrally with one element of the link mechanism and a caliper attached to a vehicle body frame. In the anti-roll device, the caliper is used to fix the brake disk to the vehicle body frame. In this way, the operation of the link mechanism can be restricted. This can prevent the roll motion of the vehicle.

The operability of the vehicle greatly differs depending on whether the operation of the link mechanism is restricted or not. Therefore, the rider often drives the vehicle while being aware of whether the operation of the link mechanism is restricted. However, it has been found out that recognizing whether the operation of the link mechanism is restricted is not sufficient in some cases. More specifically, an actual state of the vehicle and a state of the vehicle understood by the rider are more likely to differ depending on the state of the road surface when the operation of the link mechanism is restricted.

An object of the present invention is to reduce difference between the state of the vehicle and a state of the vehicle recognized by the rider when the operation of the link mechanism is restricted.

A saddle riding type vehicle according to a first aspect of the invention includes a vehicle body frame, a pair of front wheels, a link mechanism, a locking mechanism, a controller, a state determiner, and a notifying unit. The link mechanism connects the pair of front wheels to the vehicle body frame. The locking mechanism locks the link mechanism by restricting operation of the link mechanism and unlocks the link mechanism by allowing the link mechanism to operate. The controller controls locking and unlocking of the link mechanism by the locking mechanism. The state determiner determines whether relative displacement between the pair of the front wheels in a vertical direction exceeds a prescribed range. The notifying unit notifies that the link mechanism is locked while the relative displacement between the pair of front wheels in the vertical direction exceeds the prescribed range.

The vehicle is often upright when the link mechanism is locked. In this case, the rider may sometimes feel as if the pair of front wheels are in the same position in the gravity direction. However, the front wheels may be locked as they are relatively displaced in the direction of gravity because of a sloped road surface or steps. In this case, if the vehicle is moved to a location on a flat road surface, the vehicle may be tilted.

According to the aspect, it is notified that the link mechanism is locked while the pair of front wheels are shifted in the vertical direction. Therefore, an actual state of the vehicle and a state of the vehicle recognized by the rider are hardly different.

According to a second aspect of the invention, in the saddle riding type vehicle according to the first aspect, the notifying unit continuously notifies a locked state of the link mechanism. In this way, the rider can be more easily aware of the locked state of the link mechanism.

According to a third aspect of the invention, the saddle riding type vehicle according to the second aspect further includes an operation unit. The operation unit outputs an operation signal to the controller in response to an operation input by the rider. The controller controls the locking mechanism to unlock the link mechanism if the operation signal is input. The notifying unit notifies that the link mechanism is locked until the link mechanism is unlocked if the relative displacement between the pair of front wheels in the vertical direction exceeds the prescribed range while the locking mechanism locks the link mechanism.

According to the aspect, it is notified that the link mechanism is locked until the link mechanism is unlocked. Therefore, the rider can be easily aware of the state in which the link mechanism is locked while the pair of front wheels are relatively displaced in the gravity direction.

According to a fourth aspect of the invention, the saddle riding type vehicle according to the second or third aspect further includes an engine and an engine controller that controls the engine. The engine controller includes a limiter. The limiter limits the engine speed of the engine if the lock mechanism locks the link mechanism and the relative displacement between the pair of front wheels in the vertical direction exceeds the prescribed range.

According to the aspect, when the link mechanism is locked while the pair of front wheels are relatively displaced in the gravity direction, the traveling of the vehicle is restricted. Therefore, the traveling of the vehicle can be restricted while the pair of front wheels are relatively displaced in the gravity direction.

According to a fifth aspect of the invention, in the saddle riding type vehicle according to any one of the second to fourth aspects, the pair of front wheels include a first front wheel and a second front wheel. The second front wheel is provided apart from the first front wheel in a vehicle-widthwise direction. The saddle riding type vehicle further includes a displacement calculator. The displacement calculator calculates displacement of the second front wheel relative to the first front wheel in the vertical direction of the vehicle. The state determiner determines whether the relative displacement between the pair of front wheels in the vertical direction of the vehicle exceeds a prescribed range based on a calculation result from the displacement calculator.

According to a sixth aspect of the invention, the saddle riding type vehicle according to the fifth aspect further includes a first arm member, a second arm member, a first displacement detector, and a second displacement detector. The first arm member is connected to the first front wheel and provided in a vertically displaceable manner. The second arm member is connected to the second front wheel and provided in a vertically displaceable manner. The first displacement detector detects displacement of the first arm member in the vertical direction of the vehicle. The second displacement detector detects displacement of the second arm member in the vertical direction of the vehicle. The displacement calculator calculates displacement of the second front wheel relative to the first front wheel in the vertical direction of the vehicle based on the displacement of the first arm member in the vertical direction of the vehicle and the displacement of the second arm member in the vertical direction of the vehicle.

Note that the first arm member may be directly or indirectly connected to the first front wheel. The second arm member may be directly or indirectly connected to the second front wheel.

According to a seventh aspect of the invention, the saddle riding type vehicle according to any one of the first to sixth aspects further includes a damper. The damper damps vibrations in opposite phases caused at the pair of front wheels. The locking mechanism locks the link mechanism by restricting operation of the damper and unlocks the link mechanism by allowing the damper to operate.

According to the aspect, an additional locking mechanism is not necessary. Therefore, a compact saddle riding type vehicle can be implemented.

### BRIEF DESCRIPTION OF THE DRAWINGS

Fig. 1 is a left side view of a general structure of a saddle riding type vehicle according to an embodiment of the present invention.
Fig. 2 is a front view of a general structure of a link mechanism.
Fig. 3 is a diagram of a hydraulic circuit for a damper.
Fig. 4 is a block diagram for illustrating signals input/output to/from a control device.
Fig. 5 is a flowchart for illustrating locking control by a locking mechanism controller.
Fig. 6 is a flowchart for illustrating notifying control by a notifying controller.
Fig. 7 is a flowchart for illustrating engine speed control by an engine controller.

### DESCRIPTION OF THE EMBODIMENTS

Now, a saddle riding type vehicle according to an embodiment of the present invention will be described in conjunction with the accompanying drawings in which the same or corresponding portions are designated by the same reference characters and their description will not be repeated. Note that the saddle riding type vehicle includes a scooter type vehicle.

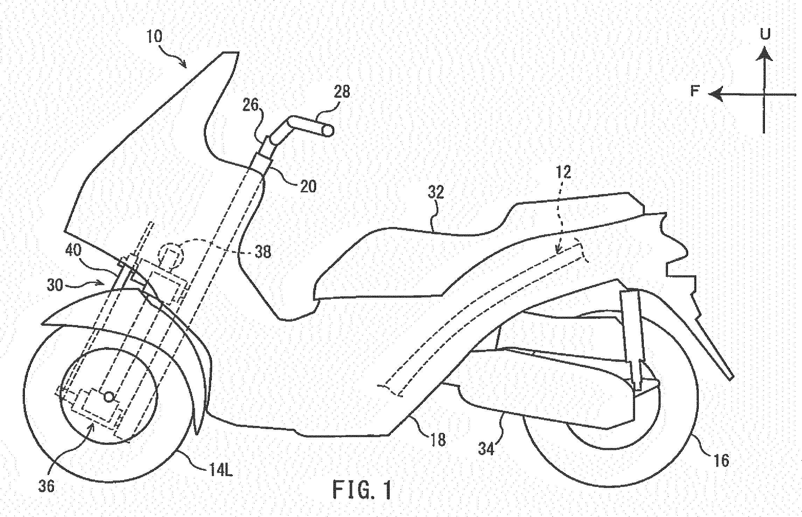

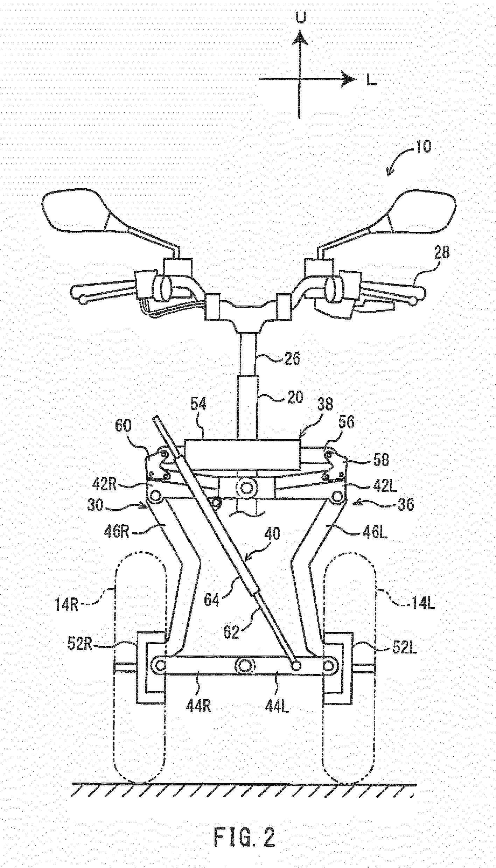

Fig. 1 is a left side view of a general structure of a saddle riding type vehicle 10 according to the embodiment of the invention. Fig. 2 is a front view of a general structure of a link mechanism provided in the saddle riding type vehicle 10. In the following description, the front, back, left, and right refer to these positions as seen by the rider seated on a seat 32 of the saddle riding type vehicle 10. In Fig. 1, the arrow F indicates a forward direction of the saddle riding type vehicle 10 and the arrow U indicates an upward direction of the saddle riding type vehicle 10. In Fig. 2, the arrow L indicates a leftward direction of the saddle riding type vehicle 10 and the arrow U indicates the upward direction of the saddle riding type vehicle 10.

### Overall Structure of Saddle Riding type Vehicle

As shown in Figs. 1 and 2, the saddle riding type vehicle 10 includes a vehicle body frame 12, a pair of front wheels 14L and 14R, and a rear wheel 16.

As shown in Fig. 1, the vehicle body frame 12 is covered with a vehicle cover 18. As shown in Fig. 1, the vehicle body frame 12 includes a head pipe 20.

As shown in Fig. 1, the head pipe 20 is provided at a front part of the vehicle body frame 12. As shown in Figs. 1 and 2, the head pipe 20 has a steering shaft 26 inserted therethrough. As shown in Figs. 1 and 2, the steering shaft 26 has a handle 28 at its upper end.

As shown in Fig. 1, a front wheel support mechanism 30 is provided in front of the head pipe 20. As shown in Fig. 2, the front wheel support mechanism 30 supports the pair of front wheels 14L and 14R. The front wheel support mechanism 30 will be described in detail in the following.

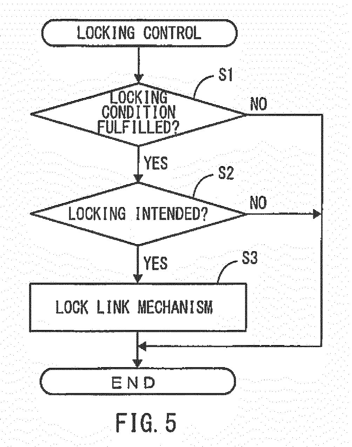

As shown in Fig. 1, the rear wheel 16 is provided below the seat 32. The seat 32 is provided above the vehicle body frame 12. The driving force of an engine 94 (see Fig. 5) is transmitted to rotate the rear wheel 16.

### Front Wheel Support Mechanism

Referring to Fig. 2, the front wheel support mechanism 30 will be described. The front wheel support mechanism 30 includes a link mechanism 36, a suspension 38, and a damper 40.

### Link Mechanism

The link mechanism 36 connects the pair of front wheels 14L and 14R to the vehicle body frame 12 (for example to a front frame provided in front of the head pipe 20). The link mechanism 36 includes an upper left arm 42L, an upper right arm 42R, a lower left arm 44L, a lower right arm 44R, a left knuckle arm 46L, and a right knuckle arm 46R.

One of the upper left arm 42L and the upper right arm 42R can swing relative to the other around an axial line through a swing center that extends in the front-back direction of the vehicle. The lower left arm 44L is provided under the upper left arm 42L. The lower right arm 44R is provided under the upper right arm 42R. One of the lower left arm 44L and the lower right arm 44R can swing relative to the other around an axial line through a swing center that extends in the front-back direction of the vehicle.

The left knuckle arm 46L extends in the vertical direction of the vehicle to connect a left end of the upper left arm 42L and a left end of the lower left arm 44L. The left knuckle arm 46L is provided so that it can swing relative to the upper left arm 42L and the lower left arm 44L around an axial line through a swing center that extends in the front-back direction of the vehicle. More specifically, the left knuckle arm 46L can move in the vertical direction.

The right knuckle arm 46R extends in the vertical direction of the vehicle to connect a right end of the upper right arm 42R and a right end of the lower right arm 44R. The right knuckle arm 46R is provided so that it can swing relative to the upper right arm 42R and the lower right arm 44R around an axial line through a swing center that extends in the front-back direction of the vehicle. More specifically, the right knuckle arm 46R can move in the vertical direction.

At a lower end of the left knuckle arm 46L, a front wheel support member 52L is provided swingably around an axial line through a swing center that extends in the vertical direction of the vehicle. The front wheel support member 52L supports the front wheel 14L in a rotatable manner.

At a lower end of the right knuckle arm 46R, a front wheel support member 52R is provided swingably around an axial line through a swing center that extends in the vertical direction of the vehicle. The front wheel support member 52R supports the front wheel 14R in a rotatable manner.

The front wheel support members 52L and 52R rotate in a plan view as the handle 28 is operated. In this way, the saddle riding type vehicle 10 can turn to the left and right.

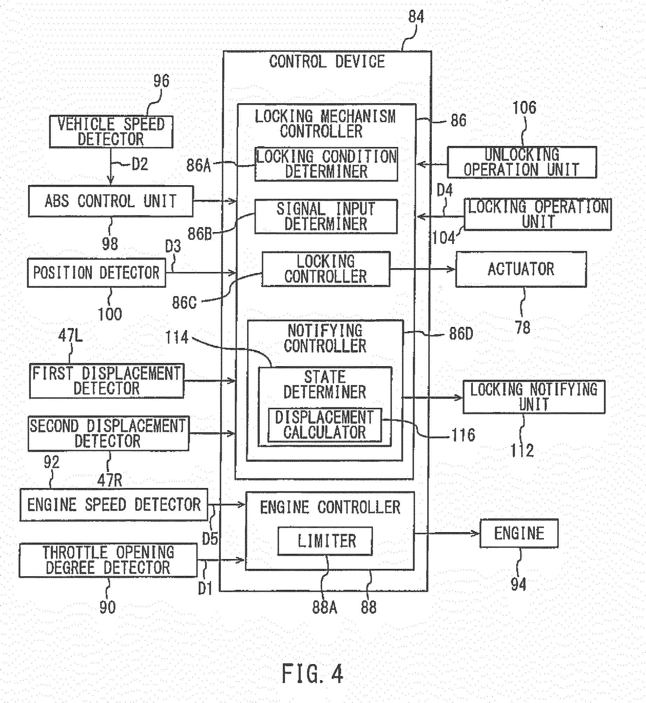

The link mechanism 36 is provided with a first displacement detector 47L (see Fig. 4) and a second displacement detector 47R (see Fig. 4).

The first displacement detector 47L detects a swing angle of the lower left arm 44L. The first displacement detector 47L may detect for example a swing angle of the lower left arm 44L itself or that of a member connected to the lower left arm 44L to swing together with the lower left arm 44L. The first displacement detector 47L outputs a signal about the detected swing angle of the lower left arm 44L to a locking mechanism controller 86 (see Fig. 4).

Here, the lower left arm 44L is connected to the left knuckle arm 46L at which the front wheel support member 52L that supports the front wheel 14L is provided. In other words, the vertical displacement of the front wheel 14L can be calculated using the swing angle of the lower left arm 44L.

The second displacement detector 47R detects a swing angle of the upper right arm 42R. The second displacement detector 47R may for example detect the swing angle of the upper right arm 42R itself or that of a member connected to the upper right arm 42R to swing together with the upper right arm 42R. The second displacement detector 47R outputs a signal about the detected swing angle of the upper right arm 42R to the locking mechanism controller 86 (see Fig. 4).

Here, the upper right arm 42R is connected to the right knuckle arm 46R at which the front wheel support member 52R that supports the front wheel 14R is provided. In other words, the vertical displacement of the front wheel 14R can be calculated using the swing angle of the upper right arm 42R.

### Suspension

As shown in Fig. 2, the suspension 38 is provided at the link mechanism 36. The suspension 38 includes a cylinder 54 and a piston 56.

The cylinder 54 is attached to a right end of the upper right arm 42R through a bracket 60. Here, the bracket 60 is fixed to the upper right arm 42R. The cylinder 54 is provided swingably relative to the bracket 60. Therefore, the cylinder 54 is provided swingably relative to the upper right arm 42R. The cylinder 54 stores operating oil.

The piston 56 is attached to a left end of the upper left arm 42L through a bracket 58. Here, the bracket 58 is fixed to the upper left arm 42L. The piston 56 is provided swingably relative to the bracket 58. Therefore, the piston 56 is provided swingably relative to the upper left arm 42L.

The piston 56 is provided movably in an axial direction of the cylinder 54. The piston 56 has a main body part (not shown) provided inside the cylinder 54. Upon receiving a vibration input that may change the relative position between the upper left arm 42L and the upper right arm 42R, the piston 56 advances/withdraws within the cylinder 54 to move in the axial direction of the cylinder 54. At the time, the movement of the main body part of the piston 56 in the cylinder 54 produces damping force. As a result, displacement vibrations caused at the link mechanism 36 are damped. For example, vibrations in the same phase caused at the upper left arm 42L and the upper right arm 42R, in other words, vibrations in the same phase caused at the pair of front wheels 14L and 14R are damped by the suspension 38.

### Damper

As shown in Fig. 2, the damper 40 is provided at the link mechanism 36. The damper 40 includes a piston 62 and a cylinder 64. The piston 62 is attached to the lower left arm 44L in a swingable manner. The cylinder 64 is attached to the upper right arm 42R in a swingable manner.

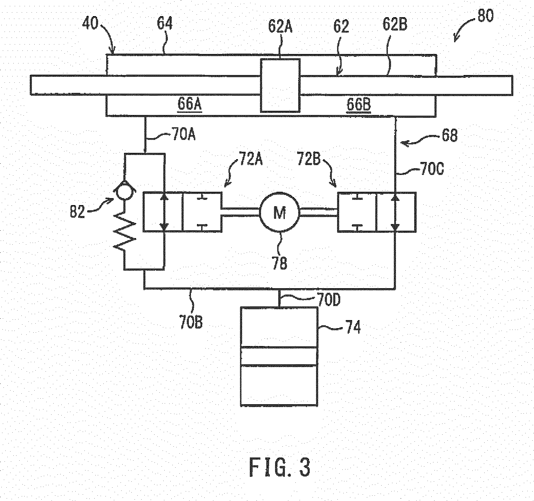

Referring to Fig. 3, a hydraulic circuit that controls the operation of the damper 40 will be described. Fig. 3 is a diagram of the hydraulic circuit for the damper 40.

The piston 62 includes a piston main body 62A and a piston rod 62B. The piston main body 62A is provided in a center part in an axial direction of the piston rod 62B. The piston main body 62A is provided movably in the cylinder 64. The piston rod 62B is provided through the cylinder 64 in the axial direction. More specifically, the damper 40 is a so-called through-rod type damper.

The cylinder 64 stores operating oil. The inside of the cylinder 64 is partitioned into two spaces (a first space 66A and a second space 66B) by the piston main body 62A. The first and second spaces 66A and 66B are connected to each other by a damping circuit 68. The operating oil can therefore move between the first and second spaces 66A and 66B through the damping circuit 68.

The damping circuit 68 includes four flow paths 70A, 70B, 70C, and 70D, two flow regulators 72A and 72B, and one temperature compensating chamber 74. The flow regulator 72A is connected to the first space 66A through the flow path 70A. The flow regulator 72A is connected to the flow regulator 72B through the flow path 70B. The flow regulator 72B is connected to the second space 66B through the flow path 70C. The temperature compensating chamber 74 is connected to the flow path 70B through the flow path 70D.

The flow regulators 72A and 72B each include a valve element and a spring. The valve elements are positioned to block the flow paths in the flow regulators 72A and 72B by the energizing force of the springs. This prevents the operating oil from flowing in the damping circuit 66. In other words, the operation of the damper 40 is restricted. The restriction of the operation of the damper 40 restricts the operation of the link mechanism 36. More specifically, the link mechanism 36 attains a locked state.

The actuator 78 is for example a motor. The actuator 78 moves the valve element against the energizing force of the spring. At the time, the valves are in such a position that they do not block the flow paths in the flow regulators 72A and 72B. Therefore, the operating oil is allowed to flow in the damping circuit 66. In other words, the damper 40 is allowed to operate. When the operation of the damper 40 is thus allowed, vibrations are damped. When for example vibrations in opposite phases are caused at the lower left arm 44L and the upper right arm 42R, or when vibrations in opposite phases are caused at the pair of front wheels 14L and 14R, the vibrations are damped by the damper 40. When the operation of the damper 40 is allowed, the operation of the link mechanism 36 is allowed. In other words, the link mechanism attains an unlocked state.

As can be clearly understood from the above description, according to the embodiment, the damper 40, the damping circuit 66, and the actuator 78 are provided to implement the locking mechanism 80.

Note that in the example shown in Fig. 3, a relief valve 82 is provided in parallel with the flow regulator 72A. The relief valve 82 prevents the internal pressure of the cylinder 64 from increasing when the operation of the damper 40 is restricted.

### Control Device

Referring to Fig. 4, a control device 84 provided in the saddle riding type vehicle 10 will be described. Fig. 4 is a block diagram for illustrating signals input/output to/from the control device 84.

The control device 84 includes a locking mechanism controller 86 as a controller and an engine controller 88.

The locking mechanism controller 86 controls locking and unlocking of the link mechanism 36 by the locking mechanism 80. The locking mechanism controller 86 includes a locking condition determiner 86A, a signal input determiner 86B, and a locking controller 86C.

The locking condition determiner 86A determines whether a prescribed locking condition is fulfilled based on a throttle opening degree signal D1, a vehicle speed signal D2, and a position signal D3. The locking condition will be described later in the following.

The throttle opening degree signal D1 is output by a throttle opening degree detector 90 and represents a throttle opening degree. The throttle opening degree signal D1 is input to the locking mechanism controller 86 through the engine controller 88.

The vehicle speed signal D2 is output by a vehicle speed detector 96 and represents a vehicle speed. The vehicle speed detector 96 is for example a wheel speed sensor. According to the embodiment, the saddle riding type vehicle 10 includes an ABS (anti-lock braking system). Therefore, the vehicle speed signal D2 is input to the locking mechanism controller 86 through an ABS control unit 98 that controls the operation of the ABS.

The position signal D3 is output by a position detector 100 and represents the position of the valve elements provided in the flow regulators 72A and 72B. The position detector 100 determines whether the link mechanism 36 is locked. The position detector 100 outputs a locked position signal as the position signal D3 when the valve elements are positioned to block the flow paths in the flow regulators 72A and 72B. The position detector 100 outputs an unlocked position signal as the position signal D3 when the valve elements are not in positions to block the flow paths in the flow regulators 72A and 72B. The position signal D3 is input to the locking mechanism controller 86. The position detector 100 detects the positions of the valve elements included in the flow regulators 72A and 72B for example by directly detecting the positions of these valve elements or by detecting the position of the actuator 78 as well as voltage for driving the actuator 78.

The signal input determiner 86B determines whether an operation signal is input while the locking condition is fulfilled. A result of determination by the locking condition determiner 86A and an operation signal input to the locking mechanism controller 86 are used for the determination.

The operation signal D4 is output by a locking operation unit 104. The locking operation unit 104 outputs the operation signal D4 to the locking mechanism controller 86 when the rider carried out operation. The locking operation unit 104 is positioned so that the rider can operate the unit while driving. The locking operation unit 104 is implemented for example by an operation switch provided at the handle 28.

The locking controller 86C controls the locking mechanism 80 to lock the link mechanism 36 if the operation signal D4 is input while the locking condition is fulfilled. More specifically, the locking controller 86C drives the actuator 78 to move the valve elements included in the selector valves 76. In this way, the valves block the flow paths in the selector valves 76. As a result, the link mechanism 36 attains a locked state. Note that a result of determination from the signal input determiner 86B is used to determine whether the operation signal D4 is input while the locking condition is fulfilled.

The locking controller 86C unlocks the link mechanism 36 if a prescribed unlocking condition is fulfilled. The unlocking condition may be for example the rider's operation of an unlocking operation unit 106 provided in the saddle riding type vehicle 10, a vehicle speed higher than a prescribed vehicle speed or an engine speed of the engine 94 getting higher than a prescribed engine speed. When the rider operates the unlocking operation unit 106, the unlocking operation unit 106 outputs the operation signal D4 to the locking mechanism controller 86. The unlocking operation unit 106 is provided so that the rider can operate. The unlocking operation unit 106 may be implemented for example by an operation switch provided at the handle 28.

The saddle riding type vehicle 10 further includes a locking notifying unit 112 as a notifying unit. The locking notifying unit 112 notifies the rider of a locked state of the link mechanism 36 and relative displacement between the pair of front wheels 14L and 14R in the vertical direction exceeds a prescribed range. More specifically, the locking notifying unit 112 notifies the rider of that the link mechanism 36 is locked and relative displacement between the pair of front wheels 14L and 14R in the vertical direction exceeds an upper limit in a predetermined tolerated range (hereinafter simply as the prescribed upper limit). For example, if the link mechanism 36 is locked and the tilt angle of the vehicle exceeds 3°, the locking notifying unit 112 notifies the rider of the state.

The notification by the locking notifying unit 112 may be anything that is visibly or audibly recognizable by the rider. The notification that is visibly recognizable by the rider may be made using an indicator. The indicator is for example provided at a meter positioned near the handle 28. The notification that is audibly recognizable by the rider may be made using a speaker. The speaker is for example provided at the meter positioned near the handle 28.

The locking mechanism controller 86 further includes a notifying controller 86D that controls the operation of the locking notifying unit 112. The notifying controller 86D controls the locking notifying unit 112 to notify a locked state of the link mechanism 36 if the link mechanism 36 is locked and relative displacement between the pair of front wheels 14L and 14R in the vertical direction exceeds the prescribed upper limit.

The notifying controller 86D includes a state determiner 114. The state determiner 114 includes a displacement calculator 116.

The displacement calculator 116 calculates displacement of the front wheel 14R relative to the front wheel 14L in the vertical direction of the vehicle based on a swing angle of the lower left arm 44L detected by the first displacement detector 47L and a swing angle of the upper right arm 42R detected by the second displacement detector 47R. The state determiner 114 determines whether the relative displacement between the pair of front wheels 14L and 14R in the vertical direction exceeds the prescribed upper limit using the calculation result from the displacement calculator 116.

Note that whether the link mechanism 36 is in a locked state may be determined by referring to the position signal D3 output by the position detector 100.

The engine controller 88 includes a limiter 88A. The limiter 88A limits the engine speed of the engine 94 if the link mechanism 36 is locked and the relative displacement between the front wheels 14L and 14R in the vertical direction exceeds the prescribed upper limit.

The saddle riding type vehicle 10 further includes an engine speed detector 92. The engine speed detector 92 outputs an engine speed signal D5. The engine speed signal D5 represents the engine speed of the engine 94. The engine speed signal D5 is input to the engine controller 88. The engine speed signal D5 is for example used for controlling the engine speed as will be described.

### Locking Control by Locking Mechanism Controller

Now, control carried out by the locking mechanism controller 86 to lock the link mechanism 36 (locking control by the locking mechanism controller 86) will be described. Note that the locking control by the locking mechanism controller 86 is not limited to the following example.

The locking mechanism controller 86 controls the locking mechanism 80 to lock the link mechanism 36 if the operation signal D4 (output by the locking operation unit 104) is input upon fulfillment of a locking condition under which the link mechanism 36 can be locked. The locking condition is fulfilled if all of the following conditions 1 to 3 are satisfied.
Condition 1: The link mechanism 36 is in an unlocked state.
Condition 2: The present throttle opening degree is zero.
Condition 3: The present vehicle speed is lower than a prescribed vehicle speed.

Now, referring to Fig. 5, the locking control by the locking mechanism controller 86 will be described. Fig. 5 is a flowchart for illustrating the locking control by the locking mechanism controller 86.

First, the locking mechanism controller 86 determines in step S1 whether the locking condition is established. More specifically, the locking condition determiner 86A determines whether all of the above-described conditions 1 to 3 are satisfied.

The locking condition determiner 86A determines whether the link mechanism 36 is in an unlocked state by referring to an input position signal D3. If the unlocked position signal D3 is input, the condition 1 is satisfied.

The locking condition determiner 86A determines whether the present throttle opening degree is zero by referring to an input throttle opening degree signal D1. If the throttle opening degree is zero, in other words, if the throttle valve is closed, the condition 2 is satisfied.

The locking condition determiner 86A determines whether the present vehicle speed is lower than a prescribed vehicle speed (10 km/h for example) by referring to an input vehicle speed signal D2. If the present vehicle speed is lower than the prescribed vehicle speed, the condition 3 is satisfied.

Unless at least one of the conditions 1 to 3 is satisfied, the locking mechanism controller 86 ends the locking control. On the other hand, if all of the conditions 1 to 3 are satisfied, the locking mechanism controller 86 determines in step S2 whether the rider intends to lock the link mechanism 36. More specifically, the signal input determiner 86B determines whether an input condition is fulfilled. The input condition is fulfilled if the following condition 4 is satisfied.

### Condition 4: The operation signal D4 is input.

The signal input determiner 86B determines whether the operation signal D4 is input. If the operation signal D4 is input, the condition 4 is satisfied.

The operation signal D4 may be input before or after fulfillment of the locking condition.

If the condition 4 is not satisfied, the locking mechanism controller 86 ends the locking control. On the other hand, if the condition 4 is satisfied, the locking mechanism controller 86 locks the link mechanism 36 in step S3. More specifically, the locking controller 86C drives the actuator 78 to lock the link mechanism 36. The locking mechanism controller 86 subsequently ends the locking control.

### Notifying Control by Notifying Controller

Now, notifying control by the notifying controller 86D will be described. The notifying controller 86D controls the locking notifying unit 112 to notify a locked state of the link mechanism 36 if the link mechanism 36 is locked and relative displacement between the pair of front wheels 14L and 14R in the vertical direction exceeds a prescribed upper limit.

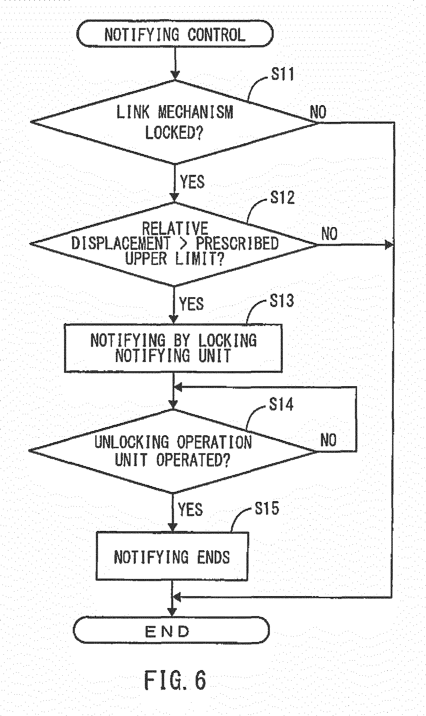

Now, referring to Fig. 6, the notifying control by the notifying controller 86D will be described. Fig. 6 is a flowchart for illustrating the notifying control by the notifying controller 86D.

First in step S11, the notifying controller 86D determines whether the link mechanism 36 is in a locked state. More specifically, the notifying controller 86D refers to an input position signal D3 and determines whether the link mechanism 36 is locked. If a locked position signal D3 is input, the link mechanism 36 is locked.

If the link mechanism 36 is not locked (NO in step S11), the notifying controller 86D ends the notifying control. On the other hand, if the link mechanism 36 is locked (YES in step S11), the notifying controller 86D (the state determiner 104 to be specific) determines in step S12 whether relative displacement between the front wheels 14L and 14R in the vertical direction exceeds the prescribed upper limit.

If the relative displacement between the front wheels 14L and 14R in the vertical direction does not exceed the prescribed upper limit (NO in step S12), the notifying controller 86D ends the notifying control. On the other hand, if the relative displacement between the front wheels 14L and 14R in the vertical direction exceeds the prescribed upper limit (YES in step S12), the notifying controller 86D carries out notification by the locking notifying unit 112 in step S13. More specifically, the notifying controller controls the operation of the locking notifying unit 112 to start to notify the rider of the locked state of the link mechanism 36.

Subsequently, the notifying controller 86D determines in step S14 whether the unlocking operation unit 106 has been operated. If a signal from the unlocking operation unit 106 is input, the unlocking operation unit 106 has been operated.

If the unlocking operation unit 106 has not been operated (NO in step S14), the notifying controller 86D stands by until the unlocking operation unit 106 is operated. At the time, the locking notifying unit 112 continues to notify the locked state of the link mechanism 36. On the other hand, if the unlocking operation unit 106 has been operated (YES in step S14), the notifying controller 86D ends the notification by the locking notifying unit 112 in step S15. The notifying controller 86D subsequently ends the notifying control.

### Engine Speed Control by Engine Controller

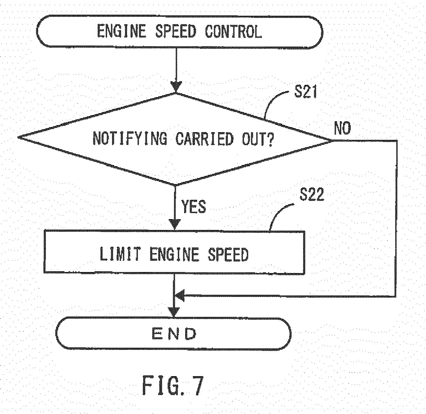

Now, referring to Fig. 7, engine speed control by the engine controller 88 will be described. Fig. 7 is a flowchart for illustrating the engine speed control by the engine controller 88.

First, the engine controller 88 determines in step S21 whether the link mechanism 36 is locked and relative displacement between the pair of front wheels 14L and 14R in the vertical direction exceeds a prescribed upper limit, in other words whether notification by the locking notifying unit 112 has been carried out according to the embodiment. The determination can be carried out for example by referring to a signal from the notifying controller 86D (a signal indicates that notification by the locking notifying unit 112 has been carried out).

If notification by the locking notifying unit 112 has not been carried out (NO in step S21), the engine controller 88 ends the engine speed control. On the other hand, if the notification by the locking notifying unit 112 has been carried out (YES in step S21), the engine controller 88 limits the engine speed in step S22. More specifically, the limiter 88A operates so that the engine speed of the engine 94 does not exceed a prescribed upper limit if the rider operates to open the throttle. The engine speed of the engine 94 can be obtained by referring to an output from the engine speed detector 92 provided in the saddle riding type vehicle 10 (see Fig. 4). Subsequently, the engine controller 88 ends the engine speed control.

Note that the limiting by the engine controller 88 (the limiter 88A to be specific) ends if for example the notification by the locking notifying unit 112 ends.

In the saddle riding type vehicle 10, the link mechanism 36 can be locked. When the link mechanism 36 is locked, the vehicle is often in its upright state. Here, the "upright state" refers to the state in which the side surfaces of the front wheels 14L and 14R are parallel to the direction of gravity (the vertical direction), in other words, the state in which the axle for the front wheels 14L and 14R is orthogonal to the direction of gravity. When the vehicle is upright, the rider may sometimes feel as if the front wheels 14L and 14R are locked as they are in the same position in the direction of gravity. However, the front wheels 14L and 14R may be locked as they are relatively displaced in the direction of gravity because of a sloped road surface or steps. In this case, if the vehicle is moved to a location on a flat road surface, the vehicle may be tilted.

In the saddle riding type vehicle 10, the locked state of the link mechanism 36 is notified while the front wheels 14L and 14R are shifted in the vertical direction. Therefore, an actual state of the vehicle and a state of the vehicle understood by the rider are hardly different.

In the saddle riding type vehicle 10, the locked state of the link mechanism 36 continues to be notified. Therefore, it can be easier to let the rider aware of the locked state of the link mechanism 36.

In the saddle riding type vehicle 10, the locked state of the link mechanism 36 is notified until the link mechanism 36 is unlocked. Therefore, it can be easier to let the rider aware of the state in which the link mechanism 36 is locked while the front wheels 14L and 14R are relatively displaced in the direction of gravity.

In the saddle riding type vehicle 10, when the link mechanism 36 is locked while the front wheels 14L and 14R are relatively displaced in the direction of gravity, the traveling of the vehicle is limited by the limiter 88A. Therefore, the vehicle can be prevented from traveling while the front wheels 14L and 14R are relatively displaced in the direction of gravity.

According to the above-described embodiment, the engine controller 88 includes the limiter 88A but the engine controller 88 does not have to include the limiter 88A.

According to the above-described embodiment, the first displacement detector 47L detects a swing angle of the lower left arm 44L, and the second displacement detector 47R detects a swing angle of the upper right arm 42R while the first displacement detector may detect a swing angle of the lower left arm 44L and the second displacement detector may detect a swing angle of the lower right arm 44R or the first displacement detector may detect a swing angle of the upper left arm 42L and the second displacement detector may detect a swing angle of the upper right arm 42R.

According to the above-described embodiment, the locked state of the link mechanism 36 continues to be notified while the notification does not have to continue.

According to the above-described embodiment, it is determined whether notification by the locking notifying unit 112 is carried out and if the notification by the locking notifying unit 112 is carried out, the engine speed of the engine 94 does not exceed a prescribed upper limit, while if the notification by the locking notifying unit 112 does not continue to be carried out, it may be determined whether the link mechanism 36 is locked and whether relative displacement between the front wheels 14L and 14R in the vertical direction exceeds a prescribed upper limit and if the link mechanism 36 is locked and the relative displacement between the front wheels 14L and 14R in the vertical direction exceeds the prescribed upper limit, the engine speed of the engine 94 is kept less than the prescribed upper limit.

The embodiment of the present invention has been described but the same is only exemplary illustration to show how the present invention is carried out. Therefore, the invention is not limited by the description of the embodiment and modifications may be made to the embodiment without departing the scope of the invention.

## Claims

1. A saddle riding type vehicle, where the vehicle is caused to lean when being turned, the vehicle comprising:
a vehicle body frame (12);
a pair of front wheels (14L, 14R);
a link mechanism (36) that connects the pair of front wheels (14L,14R) to the vehicle body frame (12);
a locking mechanism (80) that locks the link mechanism (36) by restricting operation of the link mechanism (36) and unlocks the link mechanism (36) by allowing the link mechanism (36) to operate;
a controller (86) that controls locking and unlocking of the link mechanism (36) by the locking mechanism (80);
a state determiner (114) that determines whether relative displacement between the pair of front wheels (14L, 14R) in a vertical direction exceeds a prescribed range;
**characterized in that** said vehicle further comprises a notifying unit (112) that notifies that the link mechanism (36) is locked while the relative displacement between the pair of front wheels (14L, 14R) in the vertical direction exceeds the prescribed range.

2. The saddle riding type vehicle according to claim 1, wherein the notifying unit (112) continuously notifies a locked state of the link mechanism (36).

3. The saddle riding type vehicle according to claim 2, further comprising an operation unit (104) that outputs an operation signal (D4) to the controller (86) in response to an operation input by a rider, wherein the controller (86) controls the locking mechanism (80) to unlock the link mechanism (36) if the operation signal (D4) is input, and
the notifying unit (112) notifies that the link mechanism (36) is locked until the link mechanism (36) is unlocked if the relative displacement between the pair of front wheels (14L, 14R) in the vertical direction exceeds the prescribed range while the locking mechanism (80) locks the link mechanism (36).

4. The saddle riding type vehicle according to claim 2 or 3, further comprising:
an engine (94); and
an engine controller (88) that controls the engine (94), wherein the engine controller (88) comprises a limiter (88A) that limits an engine speed of the engine (94) if the lock mechanism locks the link mechanism (36) and the relative displacement between the pair of front wheels (14L, 14R) in the vertical direction exceeds the prescribed range.

5. The saddle riding type vehicle according to any one of claims 2 to 4, wherein the pair of front wheels (14L,14R) comprises a first front wheel (14L;R) and a second front wheel (14L;R) provided apart from the first front wheel (14L;R) in a vehicle-widthwise direction, the saddle riding type vehicle further comprising a displacement calculator (116) that calculates displacement of the second front wheel (14L;R) relative to the first front wheel (14L;R) in the vertical direction of the vehicle, and
the state determiner (114) determines whether the relative displacement between the pair of front wheels (14L,14R) in the vertical direction exceeds the prescribed range based on a calculation result from the displacement calculator (116).

6. The saddle riding type vehicle according to claim 5, further comprising:
a first arm member (46L;R) connected to the first front wheel (14L;R) and provided in a vertically displaceable manner;
a second arm member (46L;R) connected to the second front wheel (14L;R) and provided in a vertically displaceable manner;
a first displacement detector (47L;R) that detects displacement of the first arm member (46L;R) in the vertical direction of the vehicle; and
a second displacement detector (47L;R) that detects displacement of the second arm member (46L;R) in the vertical direction of the vehicle, wherein the displacement calculator (116) calculates displacement of the second front wheel (14L;R) relative to the first front wheel (14L;R) in the vertical direction of the vehicle based on the displacement of the first arm member (46L;R) in the vertical direction of the vehicle and the displacement of the second arm member (46L;R) in the vertical direction of the vehicle.

7. The saddle riding type vehicle according to any one of claims 1 to 6, further comprising a damper (40) that damps vibrations in opposite phases caused at the pair of front wheels (14L,14R), wherein the locking mechanism (80) locks the link mechanism (36) by restricting operation of the damper (40) and unlocks the link mechanism (36) by allowing the damper (40) to operate.

## Patentansprüche

1. Ein Sattel-Reit-Typ-Fahrzeug, bei dem das Fahrzeug veranlasst ist, sich zu neigen, wenn es abbiegt, das Fahrzeug umfasst:
einen Fahrzeug-Körper-Rahmen (12);
ein Paar von Vorder-Rädern (14L, 14R);
einen Lenker-Mechanismus (36), der das Paar von Vorder-Rädern (14L, 14R) mit dem Fahrzeug-Körper-Rahmen (12) verbindet;
einen Verriegelungs-Mechanismus (80), der den Lenker-Mechanismus (36) durch Beschränken der Betätigung des Lenker-Mechanismus (36) verriegelt und den Lenker-Mechanismus (36) durch Gestatten, dass der Lenker-Mechanismus (36) arbeitet, entriegelt;
eine Steuerung (80), die Verriegeln und Entriegeln des Lenker-Mechanismus (36) durch den Verriegelungs-Mechanismus (80) steuert;
einen Zustands-Bestimmer (114), der bestimmt, ob eine relative Verlagerung zwischen dem Paar von Vorder-Rädern (14L, 14R) in einer Vertikal-Richtung einen vorgegebenen Bereich überschreitet; **dadurch gekennzeichnet, dass** dieses Fahrzeug weiter umfasst
eine Feststellungs-Einheit (112), die feststellt, dass der Lenker-Mechanismus (36) verriegelt ist, solange die relative Verlagerung zwischen dem Paar von Vorder-Rädern (14L, 14R) in der Vertikal-Richtung den vorgegebenen Bereich überschreitet.

2. Das Sattel-Reit-Typ-Fahrzeug gemäß Anspruch 1, wobei die Feststellungs-Einheit (112) einen verriegelten Zustand des Lenker-Mechanismus (36) kontinuierlich feststellt.

3. Das Sattel-Reit-Typ-Fahrzeug gemäß Anspruch 2, das weiter umfasst eine Betätigungs-Einheit (104), die ein Betätigungs-Signal (D4) zu der Steuerung (86) in Erwiderung zu einer Betätigung durch einen Fahrer ausgibt, wobei die Steuerung (86) den Verriegelungs-Mechanismus (80) steuert, um den Lenker-Mechanismus (36) zu entriegeln, wenn das Betätigungs-Signal (D4) ausgegeben ist, und
die Feststellungs-Einheit (112) feststellt, dass der Lenker-Mechanismus (36) verriegelt ist, bis der Lenker-Mechanismus (36) entriegelt ist, wenn die relative Verlagerung zwischen dem Paar von Vorder-Rädern (14L, 14R) in der Vertikal-Richtung den vorgegebenen Bereich überschreitet, solange der Verriegelungs-Mechanismus (80) den Lenker-Mechanismus (36) verriegelt.

4. Das Sattel-Reit-Typ-Fahrzeug gemäß Anspruch 2 oder 3, das weiter umfasst:
einen Motor (94); und
eine Motor-Steuerung (88), die den Motor (94) steuert, wobei die Motor-Steuerung (88) einen Begrenzer (88A) umfasst, der eine Motor-Drehzahl des Motors (94) begrenzt, wenn der Verriegelungs-Mechanismus den Lenker-Mechanismus (36) verriegelt und die relative Verlagerung zwischen dem Paar von Vorder-Rädern (14L, 14R) in der Vertikal-Richtung den vorgegebenen Bereich überschreitet.

5. Das Sattel-Reit-Typ-Fahrzeug gemäß irgendeinem der Ansprüche 2 bis 4, wobei das Paar von Vorder-Rädern (14L, 14R) ein erstes Vorder-Rad (14L; R) und ein zweites Vorder-Rad (14L; R) umfasst, das von dem ersten Vorder-Rad (14L; R) in der Fahrzeug-Breiten-Richtung beanstandet vorgesehen ist, umfasst
das Sattel-Reit-Typ-Fahrzeug umfasst weiterhin einen Verlagerungs-Berechner (116), der Verlagerung des zweiten Vorder-Rads (14L; R) relativ zu dem ersten Vorder-Rad (14L; R) in der Vertikal-Richtung des Fahrzeugs berechnet, und
der Zustands-Bestimmer (114) bestimmt, ob die relative Verlagerung zwischen dem Paar von Vorder-Rädern (14L, 14R) in der Vertikal-Richtung den vorgegebenen Bereich überschreitet, auf Grundlage eines Berechnungs-Ergebnisses von dem Verlagerungs-Berechner (116).

6. Das Sattel-Reit-Typ-Fahrzeug gemäß Anspruch 5, das weiter umfasst:
ein erstes Arm-Element (46L; R), das mit dem ersten Vorder-Rad (14L; R) verbunden ist und in einer vertikal verlagerbaren Weise vorgesehen ist;
ein zweites Arm-Element (46L; R), das mit dem zweiten Vorder-Rad (14L; R) verbunden ist und in einer vertikal verlagerbaren Weise vorgesehen ist;
einen ersten Verlagerungs-Detektor (47L; R), der Verlagerung des ersten Arm-Elements (46L; R) in der Vertikal-Richtung des Fahrzeugs erfasst; und
einen zweiten Verlagerungs-Detektor (47L; R), der Verlagerung des zweiten Arm-Elements (46L; R) in der Vertikal-Richtung des Fahrzeugs erfasst, wobei der Verlagerungs-Berechner (116) Verlagerung des zweiten Vorder-Rads (14L; R) relativ zu dem ersten Vorder-Rad (14L; R) in der Vertikal-Richtung des Fahrzeugs auf Grundlage der Verlagerung des ersten Arm-Elements (46L; R) in der Vertikal-Richtung des Fahrzeugs und der Verlagerung des zweiten Arm-Elements (46L; R) in der Vertikal-Richtung des Fahrzeugs berechnet.

7. Das Sattel-Reit-Typ-Fahrzeug gemäß irgendeinem der Ansprüche 1 bis 6, das weiter umfasst einen Dämpfer (40), der Vibrationen in Gegen-Phase, die auf das Paar von Vorder-Rädern (14L, 14R) wirkt, dämpft, wobei der Verriegelungs-Mechanismus (80) den Lenker-Mechanismus (36) durch Beschränken der Betätigung des Dämpfers (40) verriegelt und den Lenker-Mechanismus (36) durch Gestatten, dass der Dämpfer (40) betätigt, entriegelt.

## Revendications

1. Véhicule de type à selle, le véhicule étant amené à se pencher lorsqu'il tourne, le véhicule comportant :
un châssis de véhicule (12) ;
une paire de roues avant (14L ; 14R) ;
un mécanisme de liaison (36) qui relie la paire de roues avant (14L, 14R) au châssis de véhicule (12) ;
un mécanisme de verrouillage (80) qui verrouille le mécanisme de liaison (36) en entravant le fonctionnement du mécanisme de liaison (36) et déverrouille le mécanisme de liaison (36) en permettant au mécanisme de liaison (36) de fonctionner ;
une commande (86) qui commande le verrouillage et le déverrouillage du mécanisme de liaison (36) par le mécanisme de verrouillage (80) ;
une unité de détermination d'état (114) qui détermine si le déplacement relatif entre la paire de roues avant (14L, 14R) dans une direction verticale ne dépasse pas une amplitude prescrite ;
**caractérisé en ce que** le véhicule comprend en outre
une unité de notification (112) qui signale que le mécanisme de liaison (36) est verrouillé pendant que le déplacement relatif entre la paire de roues avant (14L, 14R) dans la direction verticale dépasse l'amplitude prescrite.

2. Véhicule de type à selle selon la revendication 1, où l'unité de notification (112) signale continuellement un état verrouillé du mécanisme de liaison (36).

3. Véhicule de type à selle selon la revendication 2, comportant en outre une unité de commande (104) qui émet en sortie un signal de commande (D4) à destination de la commande (86) en réponse à une opération entrée par un conducteur, où la commande (86) ordonne au mécanisme de verrouillage (80) de déverrouiller le mécanisme de liaison (36) si le signal de commande (D4) reçu en entrée, et
l'unité de notification (112) signale que le mécanisme de liaison (36) est verrouillé jusqu'à ce que le mécanisme de liaison (36) soit déverrouillé, si le déplacement relatif entre la paire de roues avant (14L, 14R) dans la direction verticale dépasse l'amplitude prescrite pendant que le mécanisme de verrouillage (80) verrouille le mécanisme de liaison (36).

4. Véhicule de type à selle selon la revendication 2 ou 3, comportant en outre :
un moteur (94) ; et
une commande de moteur (88) qui commande le moteur (94), où la commande de moteur (88) comprend un limiteur (88A) qui limite un régime de moteur du moteur (94), si le mécanisme de verrouillage verrouille le mécanisme de liaison (36) et si le déplacement relatif entre la paire de roues avant (14L, 14R) dans la direction verticale dépasse l'amplitude prescrite.

5. Véhicule de type à selle selon l'une quelconque des revendications 2 à 4, où la paire de roues avant (14L, 14R) comporte une première roue avant (14L ; R) et une seconde roue avant (14L ; R) séparée de la première roue avant (14L ; R) dans la direction de la largeur du véhicule, le véhicule de type à selle comportant en outre un calculateur de déplacement (116) qui calcule le déplacement de la seconde roue avant (14L ; R) par rapport à la première roue avant (14L ; R) dans la direction verticale du véhicule, et l'unité de détermination d'état (114) détermine si le déplacement relatif entre la paire de roues avant (14L, 14R) dans la direction verticale dépasse l'amplitude prescrite, en se fondant sur un résultat du calcul effectué par le calculateur de déplacement (116).

6. Véhicule de type à selle selon la revendication 5, comportant en outre :
un premier élément formant un bras (46L ; R) relié à la première roue avant (14L ; R) et disposé de manière verticalement déplaçable ;
un second élément formant un bras (46L ; R) relié à la seconde roue avant (14L ; R) et disposé de manière verticalement déplaçable ;
un premier détecteur de déplacement (47L ; R) qui détecte un déplacement du premier élément formant un bras (46L ; R) dans la direction verticale du véhicule ; et
un second détecteur de déplacement (47L ; R) qui détecte un déplacement du second élément formant un bras (46L ; R) dans la direction verticale du véhicule ; où le calculateur de déplacement (116) calcule un déplacement de la seconde roue avant (14L ; R) par rapport à la première roue avant (14L ; R) dans la direction verticale du véhicule en se fondant sur le déplacement du premier élément formant un bras (46L ; R) dans la direction verticale du véhicule et sur le déplacement du second élément formant un bras (46L ; R) dans la direction verticale du véhicule.

7. Véhicule de type à selle selon l'une quelconque des revendications 1 à 6, comportant en outre un amortisseur (40) qui amortit les vibrations de phases opposées occasionnées au niveau de la paire de roues avant (14L ; 14R), où le mécanisme de verrouillage (80) verrouille le mécanisme de liaison (36) en entravant le fonctionnement de l'amortisseur (40) et déverrouille le mécanisme de liaison (36) en permettant à l'amortisseur (40) de fonctionner.
